# FASCICULE DE BREVET EUROPEEN

(11) **EP 2 092 390 B1**
(45) Date de publication et mention de la délivrance du brevet: **23.02.2011**
(21) Numéro de dépôt: 07858703.7
(22) Date de dépôt: 15.11.2007
(51) Int. Cl.: G02C 7/10, G02C 5/00

(54) **LENTILLES OPHTALMIQUES COLOREES MULTI-TEINTES POUR MYOPES**
MEHRFARBIGE BRILLENGLÄSER FÜR KURZSICHTIGE PERSONEN
MULTITINT OPHTHALMIC LENSES FOR THE SHORTSIGHTED

(30) Priorité: 17.11.2006 FR 0610098
(43) Date de publication de la demande: 26.08.2009
(73) Titulaire: Essilor International (Compagnie Générale D'Optique), 94220 Charenton le Pont (FR)
(72) Inventeur: DROBE, Björn, 94220 Charenton-le-Pont (FR); GIRAUDET, Guillaume, 94220 Charenton-le-Pont (FR)
(74) Mandataire: Cabinet Plasseraud
(86) Numéro de dépôt international: PCT/FR2007/052347
(87) Numéro de publication internationale: WO 2008/059178

(56) Documents cités:
- WO-A-97/31286
- FR-A- 1 179 188
- FR-A1- 2 389 912
- FR-A2- 2 418 478
- US-A- 3 628 854

## Description

La présente invention concerne de nouvelles lentilles ophtalmiques multicolores destinées au traitement de la myopie évolutive.

Il est communément admis que les causes de la myopie sont à la fois génétiques et acquises.

Pour des raisons encore mal comprises, le processus d'emmétropisation qui tend normalement à faire disparaître d'éventuelles erreurs de réfraction présentes à la naissance, ne fonctionne pas correctement chez les individus myopes. Ce dysfonctionnement se traduit alors par une croissance excessive de l'oeil dans le sens axial.

Des recherches effectuées sur des animaux ont montré que l'emmétropisation est un processus actif qui se déroule en réaction à des stimuli visuels reçus par l'oeil. De nombreux travaux suggèrent fortement que la défocalisation optique pourrait jouer un rôle important dans ce processus. Jusqu'ici, des stratégies de traitement de la myopie essayant de ralentir la progression de la myopie en jouant sur la focalisation se sont concentrés, avec relativement peu de succès, sur la focalisation centrale, autrement dit sur la mise au point de l'image rétinienne au niveau de la fovéa, zone centrale située dans l'axe longitudinal de l'oeil. US 362 8854 divulgue desmembranes colorées destinées a être collées sur des verres de lunettes, presentent une zone centrale et une zone périphérique de differentes couleurs. WO 97/31286 décrit des filtres pour des lentilles.

Smith et al. ont rapporté récemment dans leur demande internationale W02005/055891 que la défocalisation périphérique, c'est-à-dire le défaut de mise au point de l'image rétinienne dans la zone entourant la fovéa, pourrait jouer un rôle dans la genèse et l'évolution de la myopie et qu'une correction ciblée au niveau de cette zone pourrait ralentir efficacement la progression de la myopie. La solution technique proposée dans cette demande consiste à fournir de manière connue une correction optique appropriée en vision centrale garantissant au patient une bonne acuité visuelle, mais à ajuster la correction périphérique de manière à obtenir une focalisation périphérique en des points situés légèrement en avant de la rétine.

Une telle correction différentielle est toutefois très complexe à mettre en oeuvre. Par ailleurs, cette correction, pour être efficace, nécessite une mise en oeuvre qui garantit une bonne coaxialité de l'oeil et du dispositif correcteur. Les dispositifs correcteurs recommandés dans la demande internationale W02005/055891 sont l'orthokératologie, la chirurgie cornéenne, les implants cornéens, les lentilles de contact et les lentilles intraoculaires. Bien que ce document envisage également des lunettes en tant que dispositifs correcteurs, celles-ci constituent manifestement un mode de réalisation moins bien adapté au but de l'invention. En effet, lorsque l'oeil bouge derrière les verres de lunettes, la coaxialité de l'oeil et du dispositif correcteur est rompue et la vision centrale s'en trouve perturbée.

Il existe donc toujours un besoin pour un dispositif correcteur destiné à ralentir la progression de la myopie, permettant à la fois une bonne acuité visuelle en vision centrale et une focalisation périphérique au niveau de la rétine périphérique ou en avant de celle-ci, mais qui est moins tributaire d'un alignement parfait de son axe avec celui de l'axe oculaire.

Pour mettre au point un tel dispositif, la Demanderesse a mis à profit le phénomène bien connu de l'aberration chromatique. L'aberration chromatique est la variation de l'indice de réfraction du matériau composant une lentille en fonction de la longueur d'onde de la lumière qui le traverse. Il en résulte une distance focale qui varie en fonction de la longueur d'onde (phénomène appelé aussi aberration chromatique longitudinale) : plus la longueur d'onde est importante, plus le point de focalisation est éloigné de la lentille.

L'emmétropisation de l'oeil aboutit généralement à une longueur axiale du cristallin telle que le point de focalisation de la lumière jaune, en vision centrale, est située sensiblement sur la rétine, alors que la focalisation de la composante rouge de la lumière se fait derrière la rétine et celle de la lumière bleue légèrement en avant de la rétine. Autrement dit le plan de focalisation de la lumière jaune (570-590 nm) coupe la rétine sensiblement au niveau de la fovéa, les plans de focalisation de la lumière ayant des longueurs d'onde supérieures à 590 nm sont situés derrière la rétine et ne présentent aucun point d'intersection avec celle-ci, et les plans de focalisation des longueurs d'ondes inférieures à 570 nm sont situés en avant de la rétine et coupent celle-ci en des zones circulaires concentriques d'autant plus éloignées de la fovéa que la longueur d'onde de la lumière est courte.

L'idée à la base de la présente invention est de réduire le plus possible la zone de la rétine touchée par la défocalisation optique en filtrant sélectivement la lumière en fonction de sa longueur d'onde de manière à laisser pénétrer dans l'oeil, en un endroit donné de la rétine, uniquement la lumière dont le plan de focalisation coupe la rétine en cet endroit. Autrement dit,
- la fovéa recevra de la lumière jaune,
- une première zone annulaire directement adjacente à la fovéa recevra uniquement de la lumière ayant une longueur d'onde légèrement inférieure à celle de la lumière jaune, puis,
- une deuxième zone annulaire directement adjacente à la première zone annulaire recevra uniquement de la lumière ayant une longueur d'onde encore plus courte
   et ainsi de suite,
   la longueur d'onde de la lumière pénétrant dans l'oeil étant d'autant plus courte que la zone périphérique où elle viendra toucher la rétine sera éloignée de l'axe central de l'oeil passant par la fovéa.

Cette filtration sélective de la lumière en fonction de l'angle de pénétration de celle-ci dans l'oeil est obtenue de manière assez simple par des zones annulaires concentriques colorées sur une lentille ophtalmique correctrice adaptée à la myopie du patient.

La présente invention a par conséquent pour objet une lentille ophtalmique correctrice tel que defini dans la revendication 1.

L'invention a en outre pour objet l'utilisation d'une telle lentille ophtalmique pour la fabrication de lunettes destinées à ralentir ou stopper la progression de la myopie évolutive.

Enfin, l'invention a pour objet un procédé de traitement de la myopie évolutive comprenant la prescription, à un patient atteint de myopie évolutive, de lunettes comportant au moins une telle lentille ophtalmique.

La lentille correctrice de la présente invention est une lentille pour myopes, c'est-à-dire de préférence une lentille ophtalmique monofocale concave, d'une dioptrie négative comprise entre -0,25 et -10,00.

L'adjectif « central » utilisé pour décrire la zone de couleur jaune ou incolore signifie que cette zone occupe une position correspondant au centre optique de la lentille ophtalmique selon l'invention et est de préférence centrée autour de ce centre optique. La zone de couleur jaune ou incolore s'étend ainsi essentiellement sur la zone explorée par le regard du porteur de lunettes.

La zone centrale incolore ou de couleur jaune possède de préférence une forme circulaire ou ovale.

Avantageusement, le diamètre de la zone circulaire de couleur jaune ou incolore, ou la dimension la plus importante de la zone ovale de couleur jaune ou incolore, est compris(e) entre 5 et 35 mm, de préférence entre 10 et 20 mm, et est en particulier proche de 15 mm.

Les dimensions de la zone centrale incolore ou de couleur jaune indiquées ci-dessus correspondent aux fourchettes appropriées pour la plupart des porteurs de lunettes, mais ne tiennent pas compte des différences individuelles. Or, il est avantageux de limiter la dimension de la zone centrale de couleur jaune ou incolore à celle de la zone réellement explorée par l'oeil humain. Une telle optimisation des dimensions relatives des zones centrale et périphérique peut être effectuée par exemple grâce à la technologie *Vision Print System* (VPS) développée par la Demanderesse dans le contexte d'autres recherches concernant le comportement visuel. Il s'agit d'un appareil permettant de décrire les différences interindividuelles de stratégie de coordination des yeux et de la tête dans l'exploration visuelle de l'environnement, appelé aussi « comportement oeil-tête ». Ainsi peuvent être définis, d'un côté, des individus plutôt « bougeurs de tête » (en anglais *head mover*) ayant tendance à suivre visuellement un objet par un mouvement de la tête plutôt que par un mouvement de l'oeil, et, de l'autre côté, des individus plutôt « bougeurs d'oeil » (en anglais *eye mover*) ayant tendance a suivre visuellement un objet avec les yeux plutôt qu'avec la tête.

La détermination du comportement oeil-tête d'un porteur de lunettes, permet ainsi d'optimiser la taille de la zone centrale incolore ou de couleur jaune. Si le porteur à tendance à tourner sa tête plutôt que ses yeux pour suivre du regard un objet, une zone centrale de 5 à 15 mm, est généralement suffisante pour couvrir toute la zone de vision du verre. Inversement, si le porteur à tendance à bouger ses yeux plutôt que sa tête pour suivre du regard un objet, alors une zone centrale jaune ou incolore couvrant une zone relativement plus large de la lentille est nécessaire, par exemple une zone ayant un diamètre compris entre 15 à 35 mm.

La zone centrale incolore ou de couleur jaune est entouré d'au moins une zone périphérique, de préférence plusieurs zones périphériques, transmettant sélectivement de la lumière ayant une longueur d'onde inférieure à 570 nm.

Ces zones sont de forme annulaire et sont concentriques l'une par rapport à l'autre ou les unes par rapport aux autres. Leur centre de symétrie est de préférence supérposé au centre optique de la lentille.

La zone périphérique comporte au moins deux zones de couleurs différentes, encore plus préférentiellement trois, quatre ou cinq zones de couleurs différentes. En effet plus le nombre de zones de couleurs différentes est élevé, plus l'ajustement de la longueur d'onde de la lumière transmise en fonction de l'angle de décentrage par rapport à l'axe central sera fin, et plus l'étendue de la zone périphérique de la rétine recevant une image nette, c'est-à-dire focalisée sur celle-ci, sera grande. Le nombre de zones annulaires de couleurs différentes n'est dans la pratique limité que par la complexité du procédé de coloration de la lentille.

La zone périphérique est ainsi formée de préférence d'une multitude de zones annulaires concentriques, de couleurs différentes. Chacune de ces zones annulaires transmet sélectivement de la lumière visible d'une longueur d'onde d'autant plus courte que la zone est éloignée de la zone centrale. Ainsi, la zone annulaire directement adjacente à la zone centrale; transmet de préférence sélectivement de la lumière ayant une longueur d'onde faiblement inférieure à 570 nm, par exemple comprise entre 570 et 550 nm. La zone annulaire suivante, située autour de la première zone annulaire, transmet sélectivement de la lumière d'une longueur d'onde inférieure à 550 nm, par exemple comprise entre 550 et 530 nm et ainsi de suite. La lentille ophtalmique de la présente invention peut ainsi présenter par exemple une zone centrale incolore ou jaune, entouré d'une première zone annulaire de couleur verte, d'une deuxième zone annulaire de couleur bleue et d'une troisième zone annulaire de couleur violette. Les différentes zones annulaires peuvent avoir des largeurs identiques ou différentes les unes des autres.

Les zones annulaires entourant la zone centrale couvrent de préférence l'ensemble du spectre de la lumière visible compris entre 570 et 400 nm. La fourchette des longueurs d'ondes transmises sélectivement par chacune des zones annulaires est de préférence d'autant plus étroite que la largeur de ladite zone annulaire est faible.

Dans un mode de réalisation particulier, la zone périphérique comprend une infinité de zones annulaires transmettant chacune de la lumière d'une longueur d'onde donnée. Dans ce mode de réalisation, la zone périphérique présente, depuis sa limite intérieure vers sa limite périphérique, l'ensemble du spectre de transmission de la lumière visible de longueur d'onde comprise entre 570 nm et 400 nm, la longueur d'onde de la lumière transmise diminuant progressivement et de préférence linéairement du centre vers la périphérie de la zone. La zone périphérique aura alors l'aspect d'un arc-en-ciel incomplet en forme d'anneau balayant, de l'intérieur vers l'extérieur, le spectre visible du jaune au violet.

La lentille correctrice pour myopes telle que décrite ci-dessus permet ainsi de réduire sensiblement la zone de la rétine périphérique touchée par une défocalisation optique. Elle ne présente toutefois pas l'inconvénient d'une vision trouble lorsque l'oeil bouge derrière la lentille, dont souffre la solution technique décrite WO2005/055891. En effet, le pouvoir correcteur de la lentille peut être ajusté de manière connue et indépendamment de la couleur de la surface, afin de garantir une netteté de l'image en vision centrale. Lorsque l'oeil bouge derrière la lentille et le regard vient explorer une zone de la lentille située en dehors de la zone centrale, l'oeil percoit uniquement un changement de couleur mais la netteté de l'image ne sera en principe pas perturbée.

L'application des colorations sur des supports appropriés en verre minéral ou organique en vue de la fabrication d'une lentille ophtalmique selon l'invention peut se faire par exemple par sublimation et/ou par impression par jet d'encre. Ces techniques sont décrites par exemple dans les demandes WO2006/079564 et FR2881230 au nom de la Demanderesse. On peut également envisager l'application sur un substrat d'un film pixellisé combinée à une technologie d'impression jet d'encre tel que décrit dans la demande de brevet W02006/013250.

La présente invention sera mieux comprise à la lecture des exemples suivants qui illustrent de façon non limitative l'objet de l'invention.

### Exemple 1 : Coloration de lentilles ophtalmiques selon l'invention par impression par jet d'encre

On mélange sous agitation magnétique 40 % en poids de polyuréthanne anionique (W234 commercialisé par la société Baxenden) avec 60 % en poids de silice colloïdale (Ludox TM40 commercialisé par la société Aldrich). Après une heure d'agitation, on dépose le mélange obtenu par centrifugation (*spin coating*) sur un substrat biplan Orma™ (500 tours/20 secondes). Le dépôt est séché pendant 1h à 100°C à l'étuve. L'épaisseur du primaire ainsi obtenu est de 3.6 µm. Après séchage, la lentille optique comprenant le primaire et le substrat peut être imprimée avec une imprimante Canon i865. Une zone centrale jaune et trois zones annulaires successives respectivement de couleur verte, bleue et violette, sont dessinées à l'aide du logiciel Powerpoint™. La lentille ophtalmique est introduite dans le module de chargement de l'imprimante, celle-ci étant reliée à l'ordinateur comprenant le fichier "filtre jaune - filtre tricolore" sous Powerpoint™. L'impression est réalisée. Lorsque la lentille sort de l'imprimante, elle est immédiatement séchée pendant 1h à 100°C. On obtient une lentille ophtalmique avec un filtre jaune central et trois filtres périphériques de couleur verte, bleue et violette.

## Revendications

1. Lentille ophtalmique, **caractérisée en ce qu'**elle comprend, à sa surface,
• une première zone, centrale, incolore ou de couleur jaune, et
• au moins une deuxième zone, périphérique, transmettant sélectivement de la lumière visible ayant une longueur d'onde inférieure à 570 nm, cette zone périphérique étant formée d'une multitude de zones annulaires concentriques, de couleurs différentes, chacune des zones annulaires transmettant sélectivement de la lumière visible d'une longueur d'onde d'autant plus courte que la zone est éloignée de la zone centrale.

2. Lentille ophtalmique selon la revendication 1, **caractérisée par le fait qu'**il s'agit d'une lentille ophtalmique monofocale concave.

3. Lentille ophtalmique selon la revendication 1 ou 2, **caractérisée par le fait que** la zone centrale incolore ou de couleur jaune a une forme circulaire ou ovale.

4. Lentille ophtalmique selon la revendication 3, **caractérisée par le fait que** la zone centrale incolore ou de couleur jaune est centrée sur le centre optique de la lentille.

5. Lentille ophtalmique selon la revendication 3 ou 4, **caractérisée par le fait que** le diamètre ou la dimension la plus importante de la zone centrale de couleur jaune est compris entre 5 et 35 mm, de préférence entre 10 et 20 mm, et est en particulier proche de 15 mm.

6. Lentille ophtalmique selon l'une quelconque des revendications 1 à 5, **caractérisée par le fait que** la zone périphérique présente, depuis sa limite intérieure vers sa limite périphérique, l'ensemble du spectre de transmission de la lumière visible de longueur d'onde comprise entre 570 nm et 400 nm, la longueur d'onde de la lumière transmise diminuant progressivement et de préférence linéairement du centre vers la périphérie de la zone.

7. Utilisation d'une lentille ophtalmique selon l'une quelconque des revendications précédentes, pour la fabrication de lunettes destinées à ralentir ou stopper la progression de la myopie évolutive.

## Claims

1. Ophthalmic lens, **characterized in that** it comprises, on its surface,
• a first colourless or yellow-coloured central zone, and
• at least one second peripheral zone, selectively transmitting visible light having a wavelength of less than 570 nm, the peripheral zone being formed by a multitude of concentric annular zones, of different colours, each of the annular zones selectively transmitting visible light of a wavelength which is the shorter the further the annular zone is from the central zone.

2. Ophthalmic lens according to claim 1, **characterized by** the fact that it is a concave monofocal ophthalmic lens.

3. Ophthalmic lens according to claim 1 or 2, **characterized by** the fact that the colourless or yellow-coloured central zone is circular or oval in shape.

4. Ophthalmic lens according to claim 3, **characterized by** the fact that the colourless or yellow-coloured central zone is centred on the optical centre of the lens.

5. Ophthalmic lens according to claim 3 or 4, **characterized by** the fact that the diameter or the largest dimension of the yellow-coloured central zone is comprised between 5 and 35 mm, preferably between 10 and 20 mm, and is in particular approximately 15 mm.

6. Ophthalmic lens according to any one of claims 1 to 5, **characterized by** the fact that the peripheral zone exhibits, from its internal limit to its peripheral limit, the whole of the transmission spectrum of visible light of a wavelength comprised between 570 nm and 400 nm, the wavelength of the light transmitted progressively reducing and preferably linearly from the centre to the periphery of the zone.

7. Use of an ophthalmic lens according to any one of the previous claims, for producing spectacles intended to slow down or stop the advance of progressive myopia.

## Patentansprüche

1. Ophthalmische Linse,
**dadurch gekennzeichnet, dass** sie an ihrer Oberfläche umfasst:
- einen ersten, zentralen, farblosen oder gelben Bereich und
- wenigstens einen zweiten Peripherie-Bereich, der selektiv sichtbares Licht mit einer Wellenlänge kleiner als 570 nm durchlässt, wobei dieser Peripherie-Bereich aus einer Mehrzahl von konzentrischen, ringförmigen, verschiedenfarbigen Bereichen gebildet ist, wobei jeder der ringförmigen Bereiche selektiv sichtbares Licht mit einer Wellenlänge durchlässt, die umso kürzer ist, je weiter der Bereich von dem zentralen Bereich entfernt ist.

2. Ophthalmische Linse nach Anspruch 1,
**dadurch gekennzeichnet, dass** es stich um eine konkave, monofokale ophthalmische Linse handelt.

3. Ophthalmische Linse nach Anspruch 1 oder 2,
**dadurch gekennzeichnet, dass** der zentrale, farblose oder gelbe Bereich eine kreisförmige oder ovale Form aufweist.

4. Ophthalmische Linse nach Anspruch 3,
**dadurch gekennzeichnet, dass** der zentrale, farblose oder gelbe Bereich auf das optische Zentrum der Linse zentriert ist.

5. Ophthalmische Linse nach Anspruch 3 oder 4,
**dadurch gekennzeichnet, dass** der Durchmesser oder die bedeutendste Abmessung des zentralen gelben Bereichs zwischen 5 und 35 mm liegt, vorzugsweise zwischen 10 und 20 mm, und insbesondere nahe an 15 mm.

6. Ophthalmische Linse nach einem der Ansprüche 1 bis 5,
**dadurch gekennzeichnet, dass** der Peripherie-Bereich, von seiner inneren Grenze zu seiner Peripherie-Grenze hin, die Gesamtheit des Transmissionsspektrums des sichtbaren Lichts mit einer Wellenlänge zwischen 570 nm und 400 nm aufweist, wobei die Wellenlänge des transmittierten Lichts fortschreitend abnimmt, und vorzugsweise linear vom Zentrum zur Peripherie des Bereichs.

7. Verwendung einer ophthalmischen Linse gemäß einem der vorhergehenden Ansprüche, zur Herstellung von Brillen, die dazu bestimmt sind, die Zunahme der fortschreitenden Kurzsichtigkeit zu verlangsamen oder zu stoppen.
